(19) **Europäisches Patentamt**
**European Patent Office**
**Office européen des brevets**

(11) **EP 4 597 066 A1**

(12) **EUROPEAN PATENT APPLICATION**
published in accordance with Art. 153(4) EPC

(43) Date of publication:
06.08.2025 Bulletin 2025/32

(21) Application number: 23872494.2

(22) Date of filing: 27.09.2023

(51) International Patent Classification (IPC):
*G01M 13/04* (2019.01)

(52) Cooperative Patent Classification (CPC):
G01M 13/04

(86) International application number:
PCT/JP2023/035318

(87) International publication number:
WO 2024/071272 (04.04.2024 Gazette 2024/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.09.2022 JP 2022158719

(71) Applicant: **NSK LTD.**
**Tokyo 141-8560 (JP)**

(72) Inventor: **AOYAMA Juri**
**Fujisawa-shi, Kanagawa 251-8501 (JP)**

(74) Representative: **Grünecker Patent- und
Rechtsanwälte
PartG mbB
Leopoldstraße 4
80802 München (DE)**

(54) **ROLLING DEVICE DIAGNOSING METHOD, DIAGNOSING DEVICE, AND PROGRAM**

(57) This method for diagnosing a rolling device in which rolling elements and peripheral members are lubricated using a lubricant includes: applying an alternating-current voltage to an electric circuit comprising the rolling elements and the peripheral members; measuring an impedance and a phase angle of the electric circuit when the alternating-current voltage is applied; deriving an evaluation value representing a lubrication state inside the rolling device, using a calculation formula defined by the measured impedance and phase angle, an angular frequency of the alternating-current voltage, the number of rolling elements in the rolling device, and the number of contact points; and using the evaluation value to diagnose the lubrication state of the rolling device.

*FIG. 4*

```
                    START
                      │
   APPLY LOAD TO PREDETERMINED DIRECTION ──── S401
                      │
        INSTRUCT INPUT OF ω AND V ──── S402
                      │
        START ROTATION OF ROTARY SHAFT ──── S403
                      │
              ACQUIRE Z AND θ ──── S404
                      │
   DERIVE 1/R AND 1/C BASED ON Z, θ, AND ω ──── S405
                      │
        DIAGNOSE LUBRICATION STATE
          BASED ON 1/R AND 1/C ──── S406
                      │
                     END
```

EP 4 597 066 A1

**Description**

TECHNICAL FIELD

The present invention relates to a rolling device diagnostic method, a diagnostic device, and a program.

BACKGROUND ART

A rolling device such as a bearing is used in a wide range of industrial fields such as automobiles and various industrial machines. It is extremely important to grasp a lubrication state inside the rolling device from the viewpoint of smooth operation of the machine, securing the service life of the rolling device, and the like, and by appropriately grasping the lubrication state, maintenance such as supply of various lubricants (oil, grease, and the like) and replacement of the rolling device can be performed at an optimal timing without excess or deficiency. However, since it is difficult to directly visually observe the lubrication state, a method of monitoring vibration, sound, and an oil film state has been proposed as a rolling device diagnostic method.

For example, Patent Literature 1 discloses, as a method for diagnosing a lubrication state inside a rolling device, a method in which an AC power supply is applied to the rolling device to measure an impedance and a phase angle, thereby calculating a lubricating film thickness and a metal contact ratio.

CITATION LIST

PATENT LITERATURE

Patent Literature 1: Japanese Patent No. 6380720

SUMMARY OF INVENTION

TECHNICAL PROBLEM

Although the lubricating film thickness and the metal contact ratio can be calculated by the method of Patent Literature 1, many parameters are required for the calculation, and it is difficult to uniquely set many of the parameters. On the other hand, it is required to perform diagnosis by a simpler method depending on a diagnosis target or the like.

In view of the above problem, an object of the present invention is to provide a method for diagnosing a lubrication state inside a rolling device by a simpler method than the method in the related art.

SOLUTION TO PROBLEM

In order to solve the above problem, the present invention has the following configuration. That is, a method for diagnosing a rolling device in which a rolling element and a peripheral member are lubricated with a lubricant, the method including:

applying an AC voltage to an electric circuit including the rolling element and the peripheral member;
measuring an impedance and a phase angle of the electric circuit when the AC voltage is applied;
deriving an evaluation value indicating a lubrication state in the rolling device by using a calculation formula defined from the measured impedance, the measured phase angle, an angular frequency of the AC voltage, and the number of the rolling element and the number of contact point in the rolling device; and
diagnosing the lubrication state of the rolling device by using the evaluation value.

Further, another aspect of the present invention has the following configuration. That is, a device for diagnosing a rolling device in which a rolling element and a peripheral member are lubricated with a lubricant, the device including:

an acquisition unit configured to acquire an impedance and a phase angle of an electric circuit including the rolling element and the peripheral member when an AC voltage is applied, the impedance and the phase angle being obtained when the AC voltage is applied to the electric circuit;
a derivation unit configured to derive an evaluation value indicating a lubrication state in the rolling device by using a calculation formula defined from the impedance, the phase angle, an angular frequency of the AC voltage, and the number of the rolling element and the number of contact point in the rolling device; and
a diagnostic unit configured to diagnose the lubrication state of the rolling device by using the evaluation value.

Further, another aspect of the present invention has the following configuration. That is, a program that causes a computer to function as follows:

an acquisition unit configured to acquire an impedance and a phase angle of an electric circuit including a rolling element constituting a rolling device and a peripheral member of the rolling element when an AC voltage is applied, the impedance and the phase angle being obtained when the AC voltage is applied to the electric circuit;
a derivation unit configured to derive an evaluation value indicating a lubrication state in the rolling device by using a calculation formula defined from the impedance, the phase angle, an angular frequency of the AC voltage, and the number of the rolling element and the number of contact point in the rolling device; and
a diagnostic unit configured to diagnose the lubrication state of the rolling device by using the evaluation value.

ADVANTAGEOUS EFFECTS OF INVENTION

With the present invention, it is possible to diagnose the lubrication state inside the rolling device by a simpler method than the method in the related art.

BRIEF DESCRIPTION OF DRAWINGS

FIG. 1 is a schematic diagram illustrating a configuration example of a system to which diagnosis processing according to an embodiment of the present invention may be applied.
FIG. 2 is a conceptual diagram illustrating a contact region of a rolling bearing.
FIG. 3 is a diagram illustrating an equivalent circuit around the contact region of the rolling bearing.
FIG. 4 is a flowchart of the diagnosis processing according to the embodiment of the present invention.
FIG. 5A is a graph illustrating a diagnostic result by a method in the related art.
FIG. 5B is a graph illustrating a diagnostic result by a diagnostic method according to the embodiment of the present invention.
FIGS. 6A and 6B are diagrams illustrating a problem in the method in the related art.

DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby illustrating a correspondence relationship therebetween.

<First Embodiment>

Hereinafter, a first embodiment of the present invention will be described. In the following description of a device configuration, a ball bearing is described as an example, but the present invention is not limited thereto, and can be applied to devices having other configurations. For example, the present invention is also applicable to a rolling bearing such as a rolling element (needle-like, conical, or cylindrical). In addition, without being limited to the rolling bearing, the present invention is generally applicable to a device having a configuration such as a ball screw, a linear guide, an actuator, a slide bearing, or an engine piston. Examples of such devices include move bodies such as automobiles, two-wheeled vehicles, and railway vehicles, industrial machines, and machine tools.

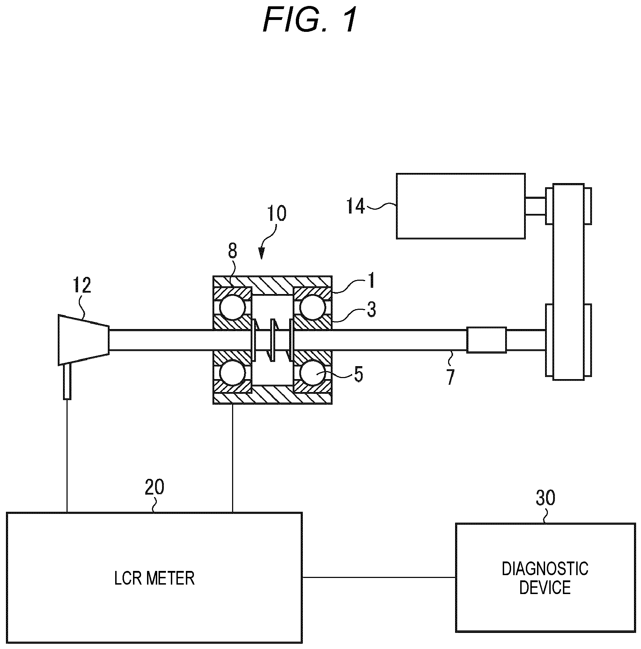

FIG. 1 is a schematic configuration diagram illustrating an example of an overall configuration when diagnosis is performed by a diagnostic device 30 that executes a diagnostic method according to the present embodiment. In FIG. 1, a bearing device 10 to which the diagnostic method according to the present embodiment is applied and the diagnostic device 30 that performs the diagnosis are provided. The configuration illustrated in FIG. 1 is an example, and different configurations may be used according to the configuration of the bearing device 10. Although a configuration in which the bearing device 10 includes two rolling bearings 8 is illustrated in FIG. 1, the present invention is not limited thereto, and the bearing device 10 may include a plurality of rolling bearings.

The bearing device 10 includes a ball bearing as the rolling bearing. In the bearing device 10, the rolling bearing 8 is provided around a rotary shaft 7 and rotatably supports the rotary shaft 7. A load is applied to the bearing device 10 in a predetermined direction by a load device (not illustrated). In the present embodiment, a radial load is applied by the load device in a direction orthogonal to the rotary shaft 7, but the direction of the load is not particularly limited.

The rolling bearing 8 includes an outer ring 1, an inner ring 3, a plurality of rolling elements 5 (balls in this example), and a cage (not illustrated) that rollably holds the rolling elements 5. Here, the outer ring 1 is a fixed ring, and the inner ring 3 is a rotating ring. Although not illustrated in FIG. 1, a shape of the cage is not particularly limited, and may change according to the shape of the rolling element 5, for example. In addition, a peripheral member of the rolling element 5 such as the outer ring 1 and the inner ring 3 may have different shapes, configurations of a rolling surface, and the like depending on the configuration of the rolling device. In the rolling bearing 8, friction between the outer ring 1 and the rolling element 5 and between the inner ring 3 and the rolling element 5 is reduced by a predetermined lubrication method. A lubrication method is not particularly limited, and for example, grease lubrication, oil lubrication, or the like is used and supplied to the inside of the rolling bearing 8. A type of the lubricant is also not particularly limited.

A motor 14 is a motor for driving, and supplies power by rotation to the rotary shaft 7. The rotary shaft 7 is connected to an LCR meter 20 via a rotating connector 12. The rotating connector 12 may be implemented using, for example, a carbon brush or a slip ring, but is not limited thereto. In addition, the rolling bearing 8 of the bearing device 10 is also electrically connected to the LCR meter 20, and at this time, the LCR meter 20 also functions as an AC power supply for the bearing device 10.

The diagnostic device 30 operates as a diagnostic device capable of executing the diagnostic method according to the present embodiment. At the time of diagnosis, the diagnostic device 30 instructs the LCR meter 20 to use, as inputs, an angular frequency $\omega$ of the AC power supply and an AC voltage V, and acquires, as outputs corresponding thereto, an impedance $|Z|$ ($|Z|$ is an absolute value of Z) and a phase angle $\theta$ of the bearing device 10 from the LCR meter 20. Then, the diagnostic device 30 performs diagnosis for the bearing device 10 using the above values. Details of the diagnostic method will be described later.

The diagnostic device 30 may be implemented by, for example, an information processing device including a control device, a storage device, and an output device, which are not illustrated. The control device may include a central processing unit (CPU), a micro processing unit (MPU), a digital single processor (DSP), and a dedicated circuit. The storage device includes volatile and nonvolatile storage media such as a hard disk drive (HDD), a read only memory (ROM), and a random access memory (RAM), and may input and output various kinds of information in response to an instruction from the control device. The output device includes a speaker, a light, or a display device such as a liquid crystal display, and performs notification to an operator in response to the instruction from the control device. A notification method by the output device is not particularly limited, and for example, may be an auditory notification by voice or a visual notification by screen output. The output device may be a network interface having a communication function, and may perform a notification operation by transmitting data to an external device (not illustrated) via a network (not illustrated). A notification content here is not limited to a notification when the abnormality is detected as a result of the diagnosis, but may include a notification indicating that the bearing device 10 is normal.

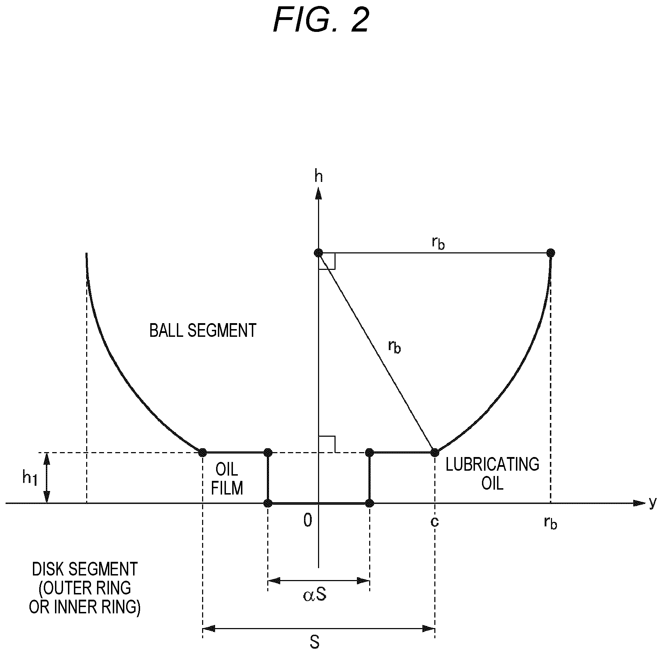

FIG. 2 is a diagram illustrating a conceptual diagram and a physical model of the rolling bearing 8 included in the bearing device 10 to be diagnosed. As also illustrated in FIG. 1, the rolling bearing 8 includes a fixed outer ring (outer member) 1, an inner ring (inner member) 3 which is a rotating ring fitted to the rotary shaft 7, and a plurality of rolling elements 5 interposed between a raceway surface formed on an inner peripheral surface of the outer ring 1 and a raceway surface formed on an outer peripheral surface of the inner ring 3. Further, an oil film (lubricating film) made of a lubricant such as oil or grease supplied for lubrication exists between the outer ring 1 and the rolling element 5 and between the inner ring 3 and the rolling element 5.

A contact state between the rolling element 5 and the outer ring 1 (or inner ring 3) in the bearing device 10 will be described with reference to FIG. 2. FIG. 2 is a graph illustrating a physical model when a ball segment and a disk segment are in contact with each other. The ball segment corresponds to the rolling element, and the disk segment corresponds to the outer ring 1 (or inner ring 3). An h axis indicates an oil film thickness (lubricating film thickness) direction, and a y axis indicates a direction orthogonal to the oil film thickness direction. Variables illustrated in FIG. 2 are as follows.

S: Hertzian contact area (Hertzian contact region)
c: Hertzian contact circle radius (= $\sqrt{S/\pi}$)
$\alpha$: breakage rate of oil film (metal contact ratio) ($0 \leq \alpha < 1$)
$r_b$: radius of ball segment
$\alpha S$: actual contact region (breakage region of oil film)
h: oil film thickness
$h_1$: oil film thickness in Hertzian contact region

In the Hertzian contact region, a ratio of a range where metals are in contact with each other to a range where the metals are not in contact with each other is $\alpha:(1 - \alpha)$. At this time, an area where the metals are in contact with each other is $\alpha S$. In an ideal state where the ball segment and the disk segment are not in contact with each other, $\alpha = 0$. When y = 0, h > 0.

Further, when the oil film is regarded as a dielectric and the outer ring 1 and the rolling element 5 are regarded as electrodes, the oil film forms capacitors $C_1$ and $C_2$, as illustrated in an enlarged view of the contact region between the outer ring 1 and the rolling element 5 in FIG. 2. The capacitor $C_1$ corresponds to a capacitor formed by the oil film in the Hertzian contact region, and has a capacitance $C_1$. The capacitor $C_2$ corresponds to a capacitor formed by the oil film in the vicinity of the Hertzian contact region ($-r_b \leq y < -c$ and $c < y \leq r_b$ in FIG. 2), and has a capacitance $C_2$. On the other hand, a metal contact portion (breakage region $\alpha S$ of oil film) where the metals are in contact with each other has a resistance $R_1$.

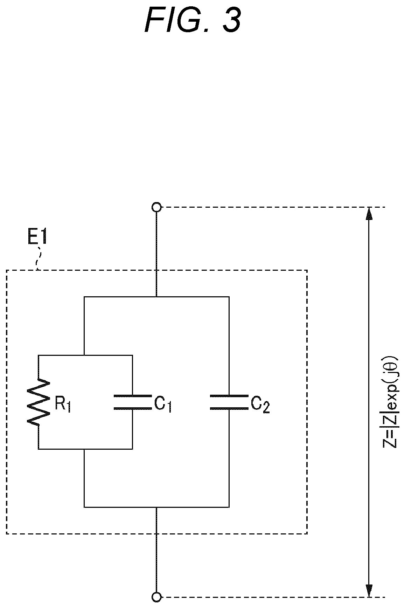

As a result, an electric circuit (equivalent circuit) $E_1$ (circuit formed by outer ring 1 or inner ring 3 and rolling element 5) corresponding to the model in FIG. 2 as illustrated in FIG. 3 is derived. The Hertzian contact region (= S) forms a parallel circuit of the resistance $R_1$ and the capacitor $C_1$ in the equivalent circuit E1 of FIG. 3. Further, the capacitor $C_2$ is connected in parallel to the electric circuit including the resistance $R_1$ and the capacitor $C_1$. At this time, it is assumed that the lubricant is filled in the vicinity of the Hertzian contact region ($-r_b \leq y < -c$, and $c < y \leq r_b$ in FIG. 2).

An AC voltage applied to the equivalent circuit $E_1$ is denoted by V, a current flowing through the equivalent circuit is denoted by I, and a complex impedance of the entire equivalent circuit E1 is expressed by the following formula.

$$V = |V|\exp(j\omega t)$$

$$I = |I|\exp(j(\omega t - \theta))$$

$$Z = V/I = |V/I|\exp(j\theta) = |Z|\exp(j\theta)$$

j: imaginary number
$\omega$: angular frequency of AC voltage
t: time
$\theta$: phase angle (shift in phase between voltage and current)

As will be described later, in the present invention, it is possible to calculate, by using the electric circuit, the metal contact ratio $\alpha$ which is a ratio of an area occupied by the metal contact portion ($\alpha S$) to the entire area of the contact region in addition to the lubricating film thickness, and to diagnose the lubrication state of the rolling device.

Although not described in detail, in Patent Literature 1, diagnosis is performed using the following Formulas (1) and (2) based on the above model.

[Math. 1]

$$h = \omega \varepsilon_1 S \left[ -\frac{n}{2} \left\{ \frac{(Z\sin\theta - \omega L)^2 + (Z\cos\theta - R)^2}{Z\sin\theta - \omega L} \right\} + R_{20}\left( \frac{Z\cos\theta - R}{Z\sin\theta - \omega L} \right) - \frac{Z\cos\theta_1 - R}{Z\sin\theta_1 - \omega L} \right]$$

$\cdot\cdot\cdot$ （１）

[Math. 2]

$$\alpha = \frac{2}{n}\frac{R_{20}}{(Z\sin\theta - \omega L)^2 + (Z\cos\theta - R)^2}\left\{ (Z\cos\theta - R) - \frac{(Z\cos\theta_1 - R)(Z\sin\theta - \omega L)}{Z\sin\theta_1 - \omega L} \right\}$$

$\cdot\cdot\cdot$ （２）

h: lubricating film thickness
$\alpha$: metal contact ratio
$\omega$: angular frequency of AC voltage
$\varepsilon_1$: dielectric constant of lubricant
S: average value of areas of contact ellipses when contact regions are approximated to contact ellipses
n: number of rolling element (number of ball) of bearing device
Z: impedance of entire electric circuit
$\theta$: phase angle
$R_{20}$: resistance of metal contact portion in state where there is no oil film completely
$\theta_1$: phase angle in state where oil film is completely present (state where there is no contact region of metal portion)
L: inductance connected in series to bearing device
R: resistance connected in series to bearing device

As described above, the above formula requires many parameters and there is an aspect that it is difficult to uniquely set many of the parameters. Therefore, there is an aspect that the calculation load related to the diagnosis becomes high. Therefore, in the present embodiment, the evaluation value indicating the lubrication state is derived by using the following Formulas (3) and (4) instead of the above Formulas (1) and (2), thereby suppressing the processing load and implementing a simpler diagnostic method than in the related art.

[Math. 3]

$$\frac{1}{R} = \frac{l}{kn}\frac{\cos\theta}{|Z|} \quad \cdots \quad (3)$$

[Math. 4]

$$\frac{1}{C} = -\frac{kn}{l}\frac{\omega|Z|}{\sin\theta} \quad \cdots \quad (4)$$

R: resistance at one contact point per one rolling element
C: reactance at one contact point per one rolling element
l: number of contact point per one rolling element
k: number of row of rolling element of rolling bearing
n: number of rolling element of rolling bearing
$\theta$: phase angle
Z: complex impedance of electric circuit
$\omega$: angular frequency of AC voltage

In the present embodiment, a formula using parameters which are less than the formula according to the method in the related art and which are easily measured is used, as shown in Formulas (3) and (4). 1/R obtained by Formula (3) may be substituted for the metal contact ratio $\alpha$ obtained by Formula (2) in the method in the related art. 1/C obtained by Formula (4) may be substituted for the lubricating film thickness h obtained by Formula (1) in the method in the related art.

[Processing Flow]

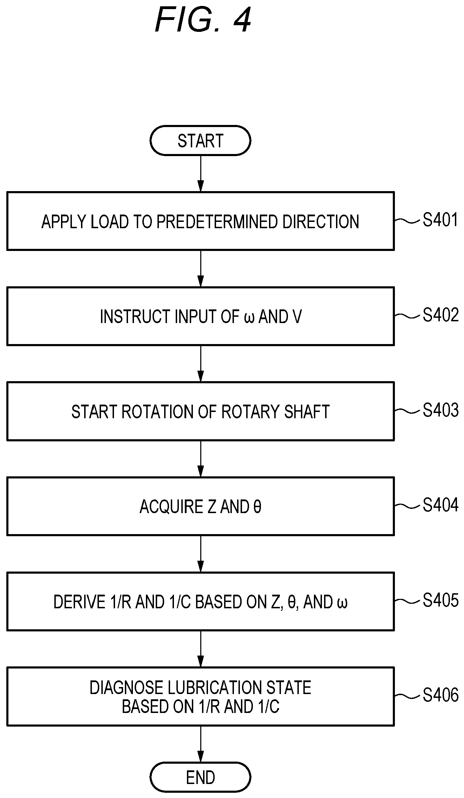

FIG. 4 is a flowchart of diagnosis processing according to the present embodiment. The processing is executed by the diagnostic device 30, and may be implemented by, for example, reading out a program for implementing the processing according to the present embodiment from the storage device (not illustrated) and executing the program by the control device (not illustrated) included in the diagnostic device 30.

In S401, the diagnostic device 30 performs control such that a load is applied to the bearing device 10 in a predetermined direction. Here, control is performed such that a radial load is applied to the rolling bearing 8 included in the bearing device 10. The control of applying the load to the bearing device 10 may be performed by a device other than the diagnostic device 30.

In step S402, the diagnostic device 30 controls the LCR meter 20 to supply the AC voltage of the angular frequency $\omega$ to the bearing device 10 by using the AC power supply (not illustrated) included in the LCR meter 20. Accordingly, the AC voltage of the angular frequency $\omega$ is applied to the bearing device 10.

In step S403, the diagnostic device 30 causes the motor 14 to start rotation of the rotary shaft 7. Accordingly, a rotation operation of the rolling bearing 8 is also started with the start of the rotary shaft 7. The motor 14 may be controlled by a device other than the diagnostic device 30.

In step S404, the diagnostic device 30 acquires the impedance |Z| and the phase angle $\theta$ from the LCR meter 20 as the output corresponding to the input in S403. That is, the LCR meter 20 outputs the impedance |Z| and the phase angle $\theta$ to the diagnostic device 30 as detection results of the bearing device 10 with respect to the AC voltage V and the angular frequency $\omega$ of the AC voltage which are inputs.

In S405, the diagnostic device 30 derives 1/R and 1/C by applying, to Formulas (3) and (4), the impedance |Z| and the phase angle $\theta$ acquired in S404, the angular frequency $\omega$ of the AC voltage used in S402, and various dimensions of the bearing device 10 to be diagnosed.

In S406, the diagnostic device 30 diagnoses the lubrication state of the bearing device 10 by using evaluation values of 1/R and 1/C derived in S405. In the diagnostic method here, for example, a threshold may be set in advance for the evaluation values of 1/R and 1/C, and the lubrication state may be diagnosed by comparison with the threshold. Then, the processing flow ends.

[Comparison of Diagnostic Results]

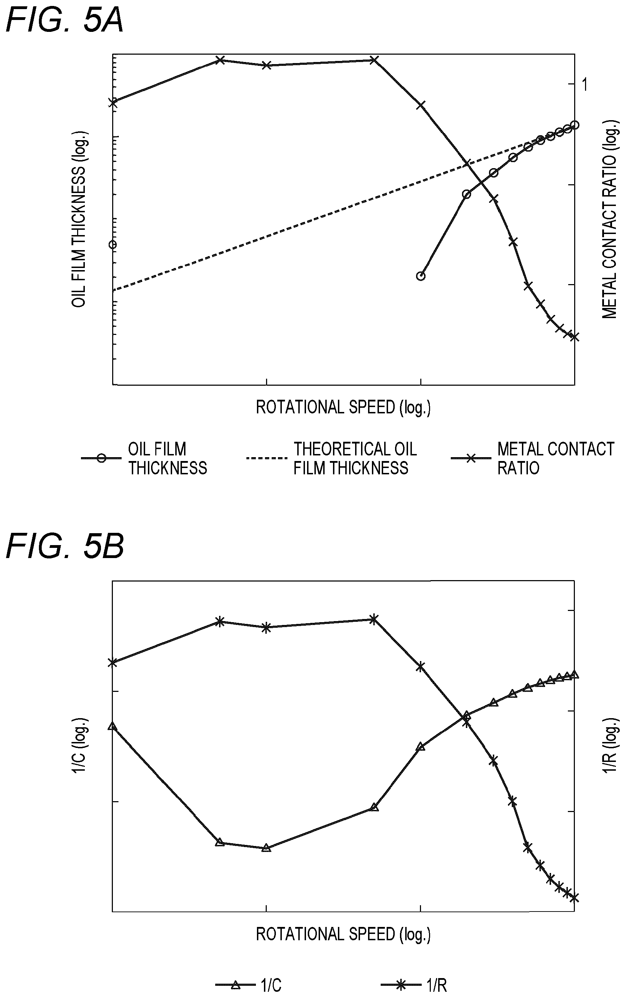

FIG. 5A is a graph illustrating diagnostic results using Formulas (1) and (2) in Patent Literature 1. In FIG. 5A, the left vertical axis represents a logarithm of the oil film thickness, the right vertical axis represents a logarithm of the metal contact ratio, and the horizontal axis represents a logarithm of a rotational speed of a rotary shaft. A value of the horizontal axis increases toward the right. A broken line in FIG. 5A represents the approximate theoretical oil film thickness calculated using the known Hamrock-Dowson formula. According to the Hamrock-Dowson formula, the oil film thickness is proportional to the speed, and thus it is known that a straight line having a slope as illustrated in FIG. 5A is shown.
Test conditions in FIG. 5A show an example using the following.

(Test Conditions)

> Ball screw shaft shape: $\varphi$25 mm
> Ball screw lead: 10 mm
> Surface texture modification
> Lubricant: grease
> Grease base oil viscosity: 29 mm$^2$/s (40°C or lower)
> Grease thickener: lithium soap

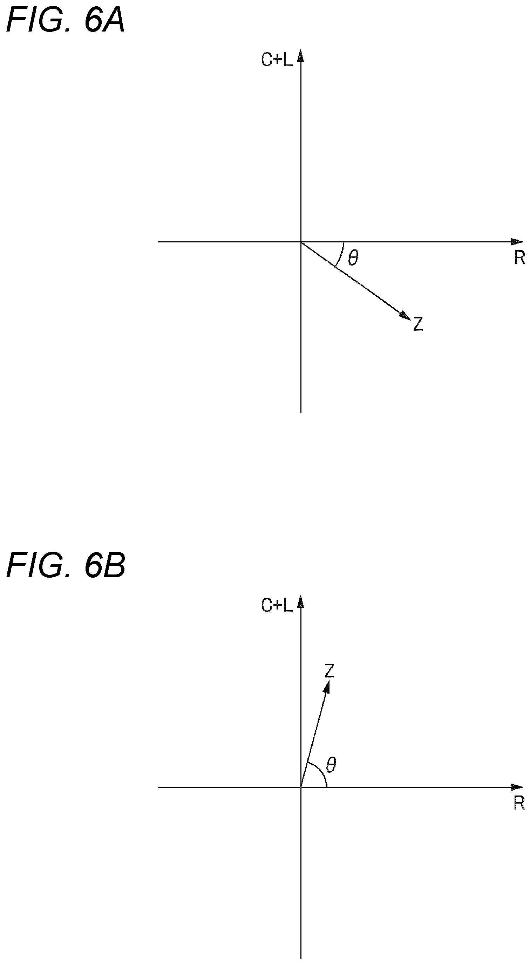

Referring to FIG. 5A, the oil film thickness increases and the metal contact ratio decreases as the rotational speed increases. When the rotational speed is lower than a certain value, the diagnostic result of the method in the related art tends to deviate from a value of the theoretical oil film thickness. When the rotational speed further decreases, there is an aspect that the oil film thickness cannot be calculated. When the rotational speed is lower than the certain value, the metal contact ratio rapidly increases, and an unreasonable value exceeding 1 is output.
One of the reasons why the measurement accuracy decreases (or cannot be calculated) when the rotary shaft is at a low speed as described above is considered to be related to the use of cos$\theta$ as a main factor when the oil film thickness is obtained in the above Formulas (1) and (2) in the method of Patent Literature 1. That is, in the method of Patent Literature 1, an initial value and a measured value are used, and a ratio of cos$\theta$ thereof is used.
In the case of the method in the related art, it is assumed that the impedance Z and the phase angle $\theta$ are in the fourth quadrant as illustrated in FIG. 6A both when the rotary shaft is stopped (that is, initial value) and when the rotary shaft is operated (that is, measured value). In FIGS. 6A and 6B, the horizontal axis represents the resistance (R), and the vertical axis represents the reactance (C+L). In the fourth quadrant, the impedance Z is positive and the phase angle $\theta$ is negative. In actual measurement, the impedance Z and the phase angle $\theta$ may be in the first quadrant as illustrated in FIG. 6B. That is, a case where both the impedance Z and the phase angle $\theta$ are positive is out of the applied condition ranges of the above Formulas (1) and (2). As a result, it is considered that the diagnostic result as illustrated in FIG. 5A is obtained.

[Diagnostic Result according to Present Embodiment]

FIG. 5B is a graph illustrating a diagnostic result by the method according to the present embodiment. In FIG. 5B, the left vertical axis represents a logarithm of the value obtained based on the method according to the present embodiment (Formula (4)), which is associated with the logarithm of the oil film thickness in FIG. 5A. In FIG. 5B, the right vertical axis represents a logarithm of the value obtained based on the method according to the present embodiment (Formula (3)), which is associated with the logarithm of the metal contact ratio in FIG. 5A.
That is, FIG. 5B is a graph obtained by calculating the simple evaluation 1/C of the oil film thickness and the simple evaluation 1/R of the metal contact ratio using Formulas (3) and (4). Referring to FIG. 5B, it is understood that the simple evaluation 1/C of the oil film thickness and the simple evaluation 1/R of the metal contact ratio have waveforms similar to the oil film thickness and the metal contact ratio in FIG. 5A, respectively.
In the method in the related art, it is necessary to use a parameter which is difficult to accurately estimate even though an average value of an area of a contact ellipse greatly affects oil film thickness conversion. Since a physical property value referred to as a dielectric constant of the lubricant is also required, a lubricant for measuring the dielectric constant is separately prepared, which means the lubrication state cannot be diagnosed when the lubricant to be used is unknown.
On the other hand, with respect to the present embodiment, in particular, with respect to 1/C, it is possible to perform diagnosis even under conditions that diagnosis cannot be performed by the above-described method in the related art, such as a case where various dimensions of a diagnosis target (ball screw in the present embodiment) or the dielectric constant of the lubricant is unknown, or a region where the rotational speed of the rotary shaft is low.

As described above, according to the present embodiment, it is possible to diagnose the lubrication state inside the rolling device by a simpler method than the method in the related art. In particular, it is possible to reduce the processing load at the time of diagnosis by using only the parameters that are easy to measure and various dimensions of the bearing device that may be set in advance. Therefore, it is possible to significantly save the calculation load compared to the method in the related art.

In the method in the related art, the impedance and the phase angle in a state where the rolling device is stopped are required in order to derive the metal contact ratio α, but such information is unnecessary in the method according to the present embodiment. Therefore, it is possible to easily perform the diagnosis in real time using only information on the driving state.

<Other Embodiments>

For example, the embodiments of the present invention are intended for a rolling device, but are not limited thereto. For example, diagnosis may be performed by creating an equivalent circuit and a correction for a mechanical device including only a sliding element having a lubricating film (for example, journal bearing or sliding element including cylinder and piston), and calculating a lubricating film thickness and a metal contact ratio.

In the present invention, a program or an application for implementing functions of the one or more embodiments described above may be supplied to a system or a device using a network or a storage medium, and a process in which one or more processors in a computer of the system or the device read and execute the program may be implemented.

In addition, it may be implemented by a circuit (for example, an application specific integrated circuit (ASIC) or a field programmable gate array (FPGA)) that implements one or more functions.

As described above, the present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected.

As described above, the following matters are disclosed in the present description.

(1) A method for diagnosing a rolling device in which a rolling element and a peripheral member are lubricated with a lubricant, the method including:

applying an AC voltage to an electric circuit including the rolling element and the peripheral member;
measuring an impedance and a phase angle of the electric circuit when the AC voltage is applied;
deriving an evaluation value indicating a lubrication state in the rolling device by using a calculation formula defined from the measured impedance, the measured phase angle, an angular frequency of the AC voltage, and the number of the rolling element and the number of contact point in the rolling device; and
diagnosing the lubrication state of the rolling device by using the evaluation value.
With this configuration, it is possible to diagnose the lubrication state inside the rolling device by a simpler method than the method in the related art. In particular, it is possible to reduce the processing load at the time of diagnosis by using only the parameters that are easy to measure and various dimensions of the bearing device that may be set in advance. Therefore, it is possible to significantly save labor related to calculation compared to the method in the related art.

(2) The diagnostic method according to (1), in which the calculation formula is as follows.

[Math. 5]

$$\frac{1}{R} = \frac{l}{kn}\frac{\cos\theta}{|Z|}$$

[Math. 6]

$$\frac{1}{C} = -\frac{kn}{l}\frac{\omega|Z|}{\sin\theta}$$

R: resistance at one contact point per rolling element
C: reactance at one contact point per rolling element
l: number of contact point per rolling element
k: number of row of rolling element of rolling bearing
n: number of rolling element of rolling bearing
θ: phase angle
Z: complex impedance of electric circuit
ω: angular frequency of AC voltage
1/R corresponds to a contact ratio between the rolling element and the peripheral member, and
1/C corresponds to an oil film thickness between the rolling element and the peripheral member.
With this configuration, it is possible to calculate, by a simple formula, an evaluation value corresponding to the contact ratio between the rolling element in the rolling device and the peripheral member and the oil film thickness between the rolling element in the rolling device and the peripheral member.

(3) A device for diagnosing a rolling device in which a rolling element and a peripheral member are lubricated with a lubricant, the device including:

an acquisition unit configured to acquire an impedance and a phase angle of an electric circuit including the rolling element and the peripheral member when an AC voltage is applied, the impedance and the phase angle being obtained when the AC voltage is applied to the electric circuit;
a derivation unit configured to derive an evaluation value indicating a lubrication state in the rolling device by using a calculation formula defined from the impedance, the phase angle, an angular frequency of the AC voltage, and the number of the rolling element and the number of contact point in the rolling device; and
a diagnostic unit configured to diagnose the lubrication state of the rolling device by using the evaluation value.
With this configuration, it is possible to diagnose the lubrication state inside the rolling device by a simpler method than the method in the related art. In particular, it is possible to reduce the processing load at the time of diagnosis by using only the parameters that are easy to measure and various dimensions of the bearing device that may be set in advance. Therefore, it is possible to significantly save labor related to calculation compared to the method in the related art.

(4) A program that causes a computer to function as follows:

an acquisition unit configured to acquire an impedance and a phase angle of an electric circuit including a rolling element constituting a rolling device and a peripheral member of the rolling element when an AC voltage is applied, the impedance and the phase angle being obtained when the AC voltage is applied to the electric circuit;
a derivation unit configured to derive an evaluation value indicating a lubrication state in the rolling device by using a calculation formula defined from the impedance, the phase angle, an angular frequency of the AC voltage, and the number of the rolling element and the number of contact point in the rolling device; and
a diagnostic unit configured to diagnose the lubrication state of the rolling device by using the evaluation value.
With this configuration, it is possible to diagnose the lubrication state inside the rolling device by a simpler method than the method in the related art. In particular, it is possible to reduce the processing load at the time of diagnosis by using only the parameters that are easy to measure and various dimensions of the bearing device that may be set in advance. Therefore, it is possible to significantly save labor related to calculation compared to the method in the related art.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the gist of the invention.
The present application is based on a Japanese patent application (No. 2022-158719) filed on September 30, 2022, contents of which are incorporated herein by reference.

REFERENCE SIGNS LIST

1: outer ring (outer member)
3: inner ring (inner member)
5: rolling element
6: metal contact portion
7: rotary shaft
8: rolling bearing
9: oil film (lubricating film)
10: bearing device (rolling device)
12: rotating connector
14: motor
20: LCR meter
30: diagnostic device

**Claims**

1. A method for diagnosing a rolling device in which a rolling element and a peripheral member are lubricated with a lubricant, the method comprising:

   applying an AC voltage to an electric circuit including the rolling element and the peripheral member;
   measuring an impedance and a phase angle of the electric circuit when the AC voltage is applied;
   deriving an evaluation value indicating a lubrication state in the rolling device by using a calculation formula defined from the measured impedance, the measured phase angle, an angular frequency of the AC voltage, and the number of the rolling element and the number of contact point in the rolling device; and
   diagnosing the lubrication state of the rolling device by using the evaluation value.

2. The diagnostic method according to claim 1, wherein the calculation formula is as follows.

[Math. 1]

$$\frac{1}{R} = \frac{l}{kn}\frac{\cos\theta}{|Z|}$$

[Math. 2]

$$\frac{1}{C} = -\frac{kn}{l}\frac{\omega|Z|}{\sin\theta}$$

R: resistance at one contact point per rolling element
C: reactance at one contact point per rolling element
l: number of contact point per rolling element
k: number of row of rolling element of rolling bearing
n: number of rolling element of rolling bearing
θ: phase angle
Z: complex impedance of electric circuit

ω: angular frequency of AC voltage

1/R corresponds to a contact ratio between the rolling element and the peripheral member, and

1/C corresponds to an oil film thickness between the rolling element and the peripheral member.

3. A device for diagnosing a rolling device in which a rolling element and a peripheral member are lubricated with a lubricant, the device comprising:

an acquisition unit configured to acquire an impedance and a phase angle of an electric circuit including the rolling element and the peripheral member when an AC voltage is applied, the impedance and the phase angle being obtained when the AC voltage is applied to the electric circuit;

a derivation unit configured to derive an evaluation value indicating a lubrication state in the rolling device by using a calculation formula defined from the impedance, the phase angle, an angular frequency of the AC voltage, and the number of the rolling element and the number of contact point in the rolling device; and

a diagnostic unit configured to diagnose the lubrication state of the rolling device by using the evaluation value.

4. A program that causes a computer to function as follows:

an acquisition unit configured to acquire an impedance and a phase angle of an electric circuit including a rolling element constituting a rolling device and a peripheral member of the rolling element when an AC voltage is applied, the impedance and the phase angle being obtained when the AC voltage is applied to the electric circuit;

a derivation unit configured to derive an evaluation value indicating a lubrication state in the rolling device by using a calculation formula defined from the impedance, the phase angle, an angular frequency of the AC voltage, and the number of the rolling element and the number of contact point in the rolling device; and

a diagnostic unit configured to diagnose the lubrication state of the rolling device by using the evaluation value.

# FIG. 1

# FIG. 2

# FIG. 3

$$Z=|Z|\exp(j\theta)$$

# FIG. 4

```
                    ┌─────────────┐
                    │    START    │
                    └─────────────┘
                           │
                           ▼
   ┌───────────────────────────────────────────────┐
   │   APPLY LOAD TO PREDETERMINED DIRECTION        │─── S401
   └───────────────────────────────────────────────┘
                           │
                           ▼
   ┌───────────────────────────────────────────────┐
   │        INSTRUCT INPUT OF ω AND V               │─── S402
   └───────────────────────────────────────────────┘
                           │
                           ▼
   ┌───────────────────────────────────────────────┐
   │        START ROTATION OF ROTARY SHAFT          │─── S403
   └───────────────────────────────────────────────┘
                           │
                           ▼
   ┌───────────────────────────────────────────────┐
   │             ACQUIRE Z AND θ                    │─── S404
   └───────────────────────────────────────────────┘
                           │
                           ▼
   ┌───────────────────────────────────────────────┐
   │   DERIVE 1/R AND 1/C BASED ON Z, θ, AND ω      │─── S405
   └───────────────────────────────────────────────┘
                           │
                           ▼
   ┌───────────────────────────────────────────────┐
   │         DIAGNOSE LUBRICATION STATE             │─── S406
   │           BASED ON 1/R AND 1/C                 │
   └───────────────────────────────────────────────┘
                           │
                           ▼
                    ┌─────────────┐
                    │     END     │
                    └─────────────┘
```

## FIG. 5A

OIL FILM THICKNESS (log.)

METAL CONTACT RATIO (log.)

1

ROTATIONAL SPEED (log.)

—⊙— OIL FILM THICKNESS          ----- THEORETICAL OIL FILM THICKNESS          —×— METAL CONTACT RATIO

## FIG. 5B

1/C (log.)

1/R (log.)

ROTATIONAL SPEED (log.)

—△— 1/C          —✳— 1/R

## FIG. 6A

## FIG. 6B

## INTERNATIONAL SEARCH REPORT

| International application No. |
| --- |
| **PCT/JP2023/035318** |

| A. | CLASSIFICATION OF SUBJECT MATTER |
| --- | --- |

*G01M 13/04*(2019.01)i
FI:   G01M13/04

According to International Patent Classification (IPC) or to both national classification and IPC

| B. | FIELDS SEARCHED |
| --- | --- |

Minimum documentation searched (classification system followed by classification symbols)

G01M13/04; F16C19/52; F16N29/00-29/04; G01N27/06; F01M11/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | MARUYAMA, Taisuke et al. Tribology Online. Lubrication Condition Monitoring of Practical Ball Bearings by Electrical Impedance Method. vol. 14, no. 5. 15 December 2019, pp. 327-338, DOI: 10.2474/trol.14.327<br>"2 Measurement principle", "5.1 Validation of measured h-values", "6 Conclusions", fig. 2-3 | 1, 3-4 |
| X | JP 2020-193968 A (NSK LTD) 03 December 2020 (2020-12-03)<br>paragraphs [0016], [0022]-[0026], [0029], [0053], fig. 1-5, 17 | 1, 3-4 |
| A | JP 6380720 B1 (NSK LTD) 29 August 2018 (2018-08-29) | 1-4 |
| A | JP 2009-002693 A (MITSUBISHI HEAVY IND LTD) 08 January 2009 (2009-01-08) | 1-4 |
| A | JP 63-290936 A (HONEYWELL INC) 28 November 1988 (1988-11-28) | 1-4 |
| A | JP 2012-163101 A (SIEMENS AG) 30 August 2012 (2012-08-30) | 1-4 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 November 2023** | **12 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/035318**

| Patent document cited in search report | | | Publication date (day/month/year) | Patent family member(s) | | | Publication date (day/month/year) |
|---|---|---|---|---|---|---|---|
| JP | 2020-193968 | A | 03 December 2020 | (Family: none) | | | |
| JP | 6380720 | B1 | 29 August 2018 | (Family: none) | | | |
| JP | 2009-002693 | A | 08 January 2009 | US | 2009/0315574 | A1 | |
| JP | 63-290936 | A | 28 November 1988 | US | 5001435 | A | |
| | | | | EP | 288940 | A2 | |
| | | | | DE | 3867893 | A | |
| | | | | CA | 1304129 | A | |
| JP | 2012-163101 | A | 30 August 2012 | US | 2013/0034439 | A1 | |
| | | | | EP | 2484900 | A1 | |
| | | | | CA | 2767022 | A1 | |
| | | | | CN | 102635513 | A | |
| | | | | KR | 10-2012-0090865 | A | |
| | | | | NZ | 597952 | A | |
| | | | | DK | 2484900 | T | |
| | | | | BR | 102012002796 | A | |

Form PCT/ISA/210 (patent family annex) (January 2015)

**REFERENCES CITED IN THE DESCRIPTION**

**Patent documents cited in the description**

- JP 6380720 B

- JP 2022158719 A